# EUROPEAN PATENT APPLICATION

(11) **EP 1 858 223 A1**
(43) Date of publication of application: **21.11.2007**
(21) Application number: 07009538.5
(22) Date of filing: 11.05.2007
(51) Int. Cl.: H04L 29/06, H04L 12/28, H04L 29/12

(54) **Shared Internet access**

(30) Priority: 16.05.2006 EP 06010038
(71) Applicant: Koninklijke KPN N.V., 2516 CK The Hague (NL)
(72) Inventor: Clements, Robin Johannes Nico, 3572 EB Utrecht (NL)
(74) Representative: Wuyts, Koenraad Maria

(57) **Abstract**

The invention relates to shared internet access for both hosts and guests, whereby the host operates or owns the hotspot. The traffic from guests is separated from the traffic from a serving host in the communication path towards the service provider and treated separately by the service provider with regards to IP number assignment and administration

## Description

### Field of the invention

The invention relates to shared Internet Access.

### Background of the invention

Several systems for shared Internet Access are known. Services based on these systems are e.g. 'Hotspots van KPN' and 'T-Mobile HotSpot'. These systems share the aspect that guest users are able to access the Internet through access points, which are owned and/or operated by host users. The host user shares his Internet Access with the guest users, thereby allowing Internet Access to the guest users.

### Problem definition

Prior art systems for shared internet access can introduce problems for hosts in case of malicious use or abuse of the shared Internet Access by guests. Because the host is responsible for the contract with the Service Provider and Network Provider, the host will be held responsible for malicious use and/or abuse of the connection. This will result in disconnection by the Service Provider and/or Network Provider when the malicious use and/or abuse persists.

### Summary of the invention

The aim of the invention is to eliminate the above-mentioned and other drawbacks of the prior art.

The invention discloses a system for shared internet access, in which guest traffic is separated from host traffic. According to an aspect of the invention, guest traffic and host traffic are assigned different communication paths when entering the service provider platform, and access to the Service Provider Platform by guest traffic is initially limited to a controlled area, such as a walled garden. The controlled area is part of the service provider platform and comprises servers and databases for e.g. guest user authentication and administration of guest traffic and guest sessions. The guest traffic is initially contained to the controlled area until successful authorization. After successful authorization, guest traffic is allowed access to the service provider platform and also to the internet.

According to an aspect of the invention, the administration of guest traffic is separated from the administration of host traffic. This is beneficial for post-session investigation in case of malicious use and/or abuse of a shared internet connection.

According to another aspect of the invention, separation of guest traffic and host traffic can be implemented at one of the following points in the guest traffic flow.

As a first option, the guest traffic and host traffic can be separated at the interface between the core network and the Service Provider platform.

As a second option, the guest traffic can be separated from host traffic in the core network, before entering the tunnel.

As a further option, the guest traffic can be separated from host traffic in the access network, before entering the core network.

As another option the guest traffic can be separated from host traffic in the access point or host network, before entering the access network.

According to an aspect of the invention, the separation of guest traffic and host traffic is based on layer 3 protocol information, such as e.g. a 5-tupple in the IP packet header.

According to another aspect of the invention, the separation of guest traffic and host traffic is based on layer 2 protocol information, such as e.g. a MAC address. Separation based on hardware related information such as a MAC address can be most beneficial for security reasons.

The walled garden (controlled area) disclosed by the current invention comprises servers and/or databases. Said servers and/or databases perform authorization services and/or IP address assignment and/or administration services.

As an aspect of the invention, IP address assignment for guest traffic is performed by a server in the walled garden. As an example this can be realized using a DHCP server. According to the invention the administration of IP address assigned to guest traffic is performed by administration servers and databases in said walled garden. The IP address assigned to the guest traffic is a temporarily unique IP address. The temporarily unique IP address is assigned to specific guest traffic and related guest user for a time period, which is configured in the administration server and/or the IP address assignment server. The time period can vary from the session-time (i.e. the time the guest is logged on to shared internet access, which ends when the guest logs of) to a maximum limit (e.g. 12 hours or 3 days). This is most beneficial for post-event analysis, like e.g. after an event of internet abuse like e.g. fraud or illegal content transport.

The invention further discloses authorization of guest users by servers in the walled garden, via e.g. a welcome page or authorization page, to which guest traffic is redirected after IP address assignment. Only after successful authorization, guest traffic (and thereby the guest user) is allowed escape from the walled garden to the service provider platform and the internet. On the event of unsuccessful authorization, the related guest traffic is redirected to an error page on a server in the walled garden, which displays an error message and/or help information.

According to an aspect of the invention, login and session administration is maintained by servers in the walled garden. This login and session administration is related to the guest user such as assigned temporarily IP address, start-time and ending-time of guest sessions and other user details.

The invention further discloses a dynamic DNS registration on the event of successful authorization by the guest user. This is beneficial for a web server operated by the guest, which needs to be addressable from the internet by means of the guest user session.

Furthermore, the invention discloses a system in which IP numbers assigned to guest traffic are maintained separate from IP numbers assigned to host traffic. This separation enables a division in the administration servers and databases between more or less 'trusted traffic' from host users and 'nomadic traffic' related to guest users. The system enables separated handling of guest traffic, e.g. for purposes of security checks, administration, reporting and monitoring. The separated handling will be beneficial for applying more detailed and/or stringent measures to guest traffic for e.g. security reasons or lawful interception.

According to another aspect of the invention, a list of host users is maintained in the access point. The list contains identification information of host client devices that are allowed to access the access point as host user. Identification information can be hardware related, such as a MAC address or serial number. The identification information can also be protocol related, such as an IP address. The list can be managed at the access point by the access point owner/operator via a management interface, or remote via the communication network. The latter case, list management via the communication network, allows remote management of the host user list by either the access point owner/operator or a third party such as a hotspot service provider. This option allows host user access to the access point by other users then the access point owner/operator only, e.g. for all registered users of a hotspot service provider. In this case the identification information of client devices, which devices can also be provided by the hotspot service provider to the users, is entered remotely to the host user list at the access point. After remote entry these client devices will be detectable as host client devices by the access point, on basis of the updated host user list.

### Brief description of the drawings

The invention will be explained in greater detail by reference to exemplary embodiments shown in the drawings, in which:
Fig. 1 shows a system for shared Internet access according to the prior art.
Fig. 2 illustrates an exemplary embodiment of the invention.
Fig. 3 shows a flow-chart representing the process flow of an exemplary embodiment according to the invention

### Detailed description of the invention

For the purpose of teaching of the invention, embodiments of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

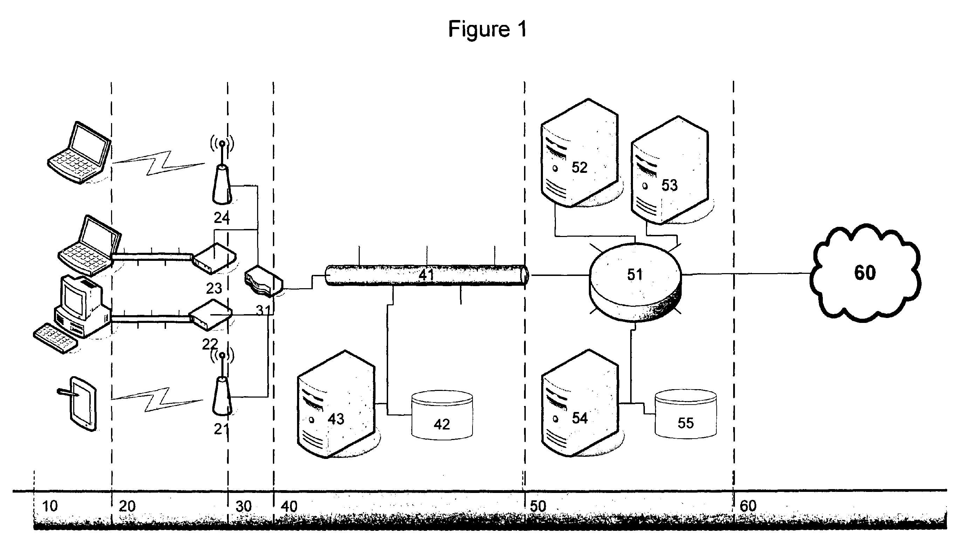

In figure 1 a prior art system for shared internet access is illustrated, in which the clients (10) are operated by various internet users. The users can be both hosts that own and/or operate the access point and one or more guests, also referred to as nomadic internet users or mobile internet users. The user clients (10) communicate with the access points (21, 22, 23, 24) via the host network (20). The host network can be a wired network such as Ethernet or HomePlug, or a wireless network such as WiFi, Bluetooth, HomeRF or Ultra Wideband (UWB). The access points are also connected to the access network (30), via which the communication flows to the core network (40). In the core network all internet traffic from users is aggregated and routed towards the Service Provider via a tunnel (41), the selection of which is dependent on the authorization server (43), such as Radius, and/or the user profile database (42). For this purpose the user profile database (42) contains host related information such as e.g. contract bandwidth, Service Provider subscriptions, Quality of Service parameters and other information used for network operational aspects.

In a typical operation in a prior art system, the host controls the log on to the network, e.g. by switching on the access point. When the host logs on to the network, an authorization request with log on information is sent to the authorization server (43). Typically the authorization request is sent by the access point (21, 22, 23, 24), but this may also be done by the user client (10). The authorization server processes the request and, when successful, selects the appropriate tunnel (41) for the user traffic and sends a positive response to the access point (or client), including the IP address assigned by the IP address assignment server (such as DHCP). The selection of the tunnel is based on the log on information and/or other host related information in the user profile database (42). Another operation in prior art systems may involve a combination of the network operator authorization server (43) and an authorization server in the service provider platform (54). In this case the network provider authorization server (43) forwards the authorization request to the authorization server in the service provider platform. The authorization server in the service provider platform processes the request and responds to the network authorization server (43). When the response is positive, a tunnel (41) will be assigned to the user traffic by the authorization server (43) and a positive response is sent to the user. From that moment all user traffic will be transported via the tunnel (41). The user traffic includes host traffic and guest traffic.

The core network 'delivers' the user traffic to the Service Provider Platform (50). The Service Provider Platform provides access to the internet (60), but also other services can be provided via the Service Provider network (51) by servers (52, 53). Some other services provided by the Service provider may require additional user authorization at application level. This authorization comprises an authorization server (54) and user database (55) in the Service provider Network.

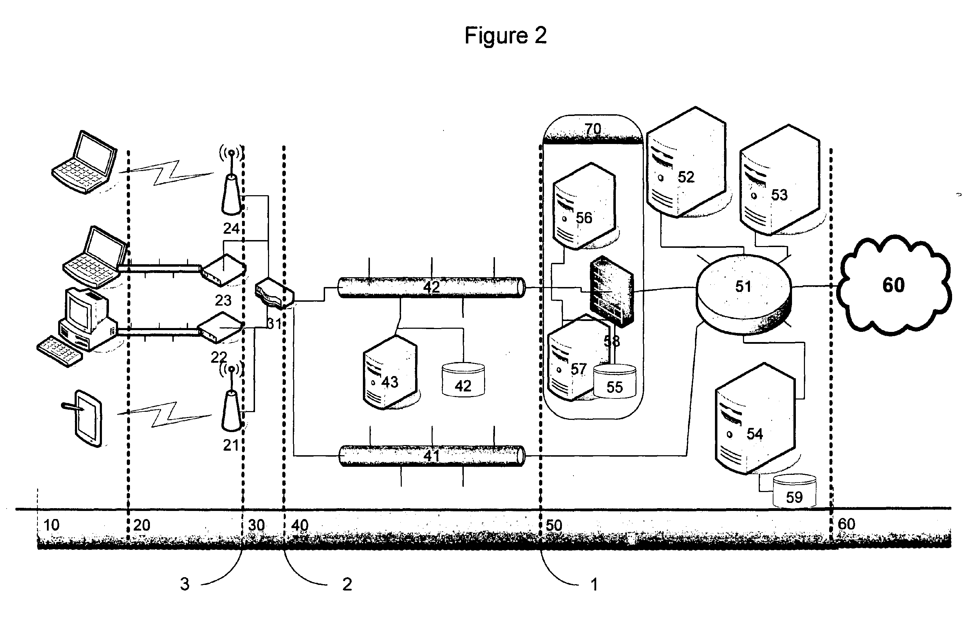

Figure 2 illustrates an embodiment according to the invention currently disclosed.

In the embodiment as shown in figure 2, the guest traffic is separated from host traffic in the access point.

The separation of guest traffic and host traffic is based on the MAC address of the user client. Separation based on this hardware related information provides a high level of security. The guest traffic can be clearly isolated in the host network, which improves security and can be beneficial for e.g. system, identity and content protection for the host and other guests.

The separation of traffic is based on a list of host users in the access point. The list contains identification information of host client devices that are allowed to access the access point as host user. A client device is classified as host user, when the identification information of the client device corresponds with identification information as stored in the host user list.

Identification information can be hardware related, such as a MAC address or serial number. The identification information can also be protocol related, such as an IP address.

The host user list can be managed at the access point by the access point owner/operator via a management interface. This management interface can be implemented as an addition to known "client access control" interfaces for access points. Also, management of the host user list can be performed remote via the communication network. This mode of operation allows remote management of the host user list by either the access point owner/operator or a third party such as a hotspot service provider.

Remote management of the host user list in an access point for shared internet access allows host user access to an access point by other users then the access point owner/operator only, e.g. for all registered users of a hotspot service provider. In this case the identification information of client devices, which devices can also be provided by the hotspot service provider to the users, is entered remotely to the host user list at the access point. After remote entry of the identification information, the corresponding client devices will be detectable as host client devices by the access point, on basis of the updated host user list.

Because the separation is realized in the host network, the traffic of hosts and guests can be separated through the end-to-end communication path towards the service provider. This is the preferred mode of operation of the system according to the invention. However, other separation points for guest traffic and host traffic can be conceived and reduced to practice, such as:
- before entering the access network (3);
- in the core network, before entering the tunnel (2);
- at the interface between the core network and the Service Provider platform (1).

As an alternative to separation based on a MAC address, separation of guest traffic and host traffic can also be based on other layer 2 protocol information, or layer 3 protocol information, such as one or more elements in the 5-tupple in the IP packet header. A person skilled in the art will appreciate that various implementations for the separation of guest traffic and host traffic are possible, for which the exemplary embodiment disclosed by the current invention are meant as examples, the shared result of the various implementations being that guest traffic and host traffic can be handled separately in the service provider platform.

On the event of network log on, for example when the access point is switched on, the authorization server (43) assigns different tunnels for host traffic and guest traffic through the core network. In the embodiment shown in figure 2, host traffic is transported through tunnel 41 and guest traffic is routed through tunnel 42.

A person skilled in the art will appreciate that transportation of traffic through the core network by means of a tunnel can be implemented using various techniques like e.g. GRE tunneling, MPLS, Virtual Channel and/or VPN, these various techniques sharing the aspect that for an aggregated number of users from various user locations, a fixed communication path to the service provider platform is provided for these users only.

The completion of the network log on includes the sending of the host IP address to the access point, which is maintained by the access point in order to route host traffic. The host IP address is assigned by the network provider, via authorization server 43, or by an IP address assignment from the service provider, involving an authorization and IP address assignment server outside the walled garden, such as authorization server 54.

IP address assignment for guest traffic always involves the authorization server (57) in the walled garden. When a guest logs in, the access point sends an authorization request to the authorization server (57) in the walled garden, or sends an authorization request to the network authorization server (43) which forwards the request to the authorization server in the walled garden (57). The authorization server (57) returns a temporarily unique IP address to the guest, which is retrieved from an IP address assignment server in the walled garden, and all traffic related to the assigned IP address is redirected to the authorization server.

Arriving at the service provider platform, host traffic is granted access to the servers (52, 53) and internet (60) on arrival. Guest traffic is however initially limited to the walled garden, i.e. the authorization server. The walled garden is an isolated part of the service provider platform and comprises servers and databases for guest user authentication and administration of guest traffic and guest sessions. The guest traffic is only allowed escape from the walled garden, i.e. access to the servers (52, 53) and internet, after successful authorization.

The administration of guest traffic is separated from the administration of host traffic. This is beneficial for post-session investigation in case of e.g. malicious use or abuse of a shared internet connection. The administration of guest traffic comprises guest user information, assigned temporarily IP address, start-time and ending-time of guest sessions and other user details.

The IP address assigned to the guest traffic is a temporarily unique IP address. The temporarily unique IP address can be a public IP address or a private IP address. In the latter case network address translation is performed when guest traffic is sent and received to or from internet. The temporarily unique IP address is assigned to specific guest traffic and related guest user for a time period, which is configured in the administration server and/or the IP address assignment server. The time period can vary from the session-time (i.e. the time the guest is logged on to shared internet access, which ends when the guest logs of) to a maximum limit (e.g. 12 hours or 3 days). This is beneficial for post-event analysis, like e.g. after an event of internet abuse (like fraud or illegal content transport). To this end the service provider is able to trace guest user information related to guest traffic at any time in the past by means of the administration servers and databases in the walled garden.

Specific guest traffic at a specific time in the past can be related to a specific guest user. This provides means to relate malicious internet use or internet abuse to specific guests and also offers the opportunity to isolate malicious internet use or internet abuse by guests from normal usage of the shared internet connection by the host. This can be most helpful for a number of reasons, such as:
- lawful interception: the service provider is able to intercept traffic of specific guests;
- isolation of sources of spam and viruses;
- bandwidth usage, fair use policy monitoring;
- illegal content traffic isolation;
- separate billing of guest traffic.

For this purpose, also the IP addresses (or IP numbers) assigned to guest traffic are maintained separate from IP numbers assigned to host traffic.

As a result of application of separated administration of guest traffic and host traffic, the isolation of problems will be extensively improved, largely decreasing or even eliminating the situation that a host needs to be disconnected by the service provider, e.g. as a result of illegal content transport. This will improve the service to both hosts and other guest users.

Another advantage is that new, innovative billing methods can be applied, such as a kick-back fee for the host, based on the guest traffic originating form the access point owned by the host.

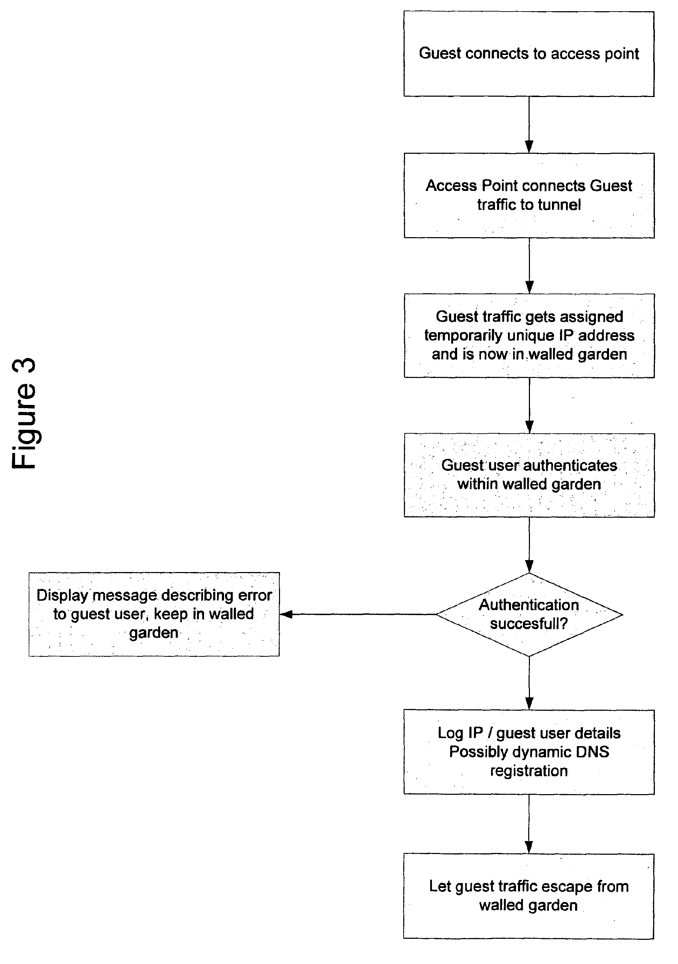

Authorization of guests by the authorization server in the walled garden is accessible via a welcome page or authorization page, to which guest traffic is redirected after IP address assignment. As indicated in the flowchart in figure 3, only after successful authorization guest traffic (and thereby the guest user) is allowed escape from the walled garden to the servers in the service provider platform (52, 53) and the internet. On the event of unsuccessful authorization, the related guest traffic is redirected to an error page on a server in the walled garden, which displays an error message and help information.

After successful authorization, a dynamic DNS registration is performed is performed, based on the guest user information in the databases. This allows the guest to operate a web server, that will be addressable from the internet after successful log in by the guest.

## Claims

1. An internet access system comprising:
- an access point capable of communicating with host client devices and guest client devices, and
- a service provider computer adapted for providing a first set of access capabilities for the host client devices and a second set of access capabilities for the guest client devices, and
- a network allowing communication between the access point and the service provider computer, wherein
the network has a first tunnel connection for host traffic from said host client devices and a second tunnel connection for guest traffic from said guest client devices and wherein
said access point is adapted to assign traffic of said host client device to said first tunnel and traffic of said guest client device to said second tunnel on the basis of protocol information communicated by said host client devices and guest client devices to said access point.

2. System according to claim 1, in which the second set of access capabilities for the guest client devices limit the access to a controlled area in the service provider platform.

3. System according to claim 1 or 2, in which authorization and/or administration of guest traffic is separated from the authorization and/or administration of host traffic.

4. System according to any of claims 1 - 3, in which guest traffic is separated from host traffic at the interface between core network and Service Provider platform.

5. System according to any of claims 1 - 3, in which guest traffic is separated from host traffic in the Core network, before entering the tunnel.

6. System according to any of claims 1 - 3, in which guest traffic is separated from host traffic in the Access Network, before entering the core network.

7. System according to any of claims 1 - 3, in which guest traffic is separated from host traffic in the Access Point, before entering the access network.

8. System according to any of claims 1 - 3, in which guest traffic is separated from host traffic in the Host network, before entering the access network.

9. System according to any of the preceding claims, in which the assigning of traffic from a host client device and a guest client device to a tunnel is based on layer 3 protocol information.

10. System according to claim 9, in which the layer 3 protocol information comprises a 5-tupple in the IP packet header.

11. System according to any of the preceding claims, in which the assigning of traffic from a host client device and a guest client device to a tunnel is based on layer 2 protocol information.

12. System according to claim 11, in which the layer 2 protocol information comprises a MAC address.

13. System according to any of the claims 2 - 12, in which the controlled area in the service provider platform comprises a walled garden.

14. System according to claim 13, in which a walled garden comprises servers and/or databases.

15. System according to claim 14, in which the servers in the walled garden comprise authorization and/or administration systems.

16. System according to claim 15, in which IP address assignment for guest traffic is performed by a server in the walled garden.

17. System according to any of the preceding claims, in which IP address administration for guest traffic is performed separately from administration of host traffic by administration servers and databases in the service provider platform.

18. System according to any of the preceding claims, in which a temporarily unique IP address is assigned to guest traffic.

19. System according to claim 18, in which guest traffic is redirected to an authorization or welcome page at one or more servers in the walled garden before login.

20. System according to claim 19, in which one or more authorization servers in the walled garden perform user authorization for guest users.

21. System according to claim 20, in which guest traffic is redirected to an error page on a server in the walled garden on the event of unsuccessful authorization.

22. System according to claim 21, in which guest traffic is allowed escape from the walled garden on the event of successful user authorization.

23. System according to claim 22, in which login and session administration is maintained on one or more servers in the walled garden related to the guest user.

24. System according to claim 23, in which said login administration comprises temporary IP addresses, start-time and ending-time of guest login sessions and other user details.

25. System according to claim 22, in which a dynamic DNS registration is performed on the event of successful authorization.

26. System according to any of the preceding claims, in which IP numbers assigned to guest traffic are maintained separate from IP numbers assigned to host traffic.

27. System according to claim 25, in which administration of guest traffic is separated from administration of host traffic.

28. Access point according to claim 1 comprising a list of host users, said access point allowing access to client devices as host user when the identification information of a client device seeking access corresponds with the identification information of an entry in the host user list.

29. Access point according to claim 27, the identification information comprising hardware related information.

30. Access point according to claim 28, the hardware related information comprising a MAC address or serial number.

31. Access point according to claim 27, the identification information comprising protocol related information.

32. Access point according to claim 30, the protocol related information comprising an IP address.

33. Access point according to claim 27 - 31 wherein the host user list is managed remotely.
